# FASCICULE DE BREVET EUROPEEN

(11) **EP 4 028 824 B1**
(45) Date de publication et mention de la délivrance du brevet: **07.08.2024**
(21) Numéro de dépôt: 20775377.3
(22) Date de dépôt: 20.08.2020
(51) Int. Cl.: G02B 27/01

(54) **ÉLÉMENT DE COUVERTURE DE L'OUVERTURE DE PROJECTION D'UN DISPOSITIF D'AFFICHAGE TÊTE-HAUTE**
ELEMENT ZUR ABDECKUNG DER PROJEKTIONSÖFFNUNG EINER HEADUP-ANZEIGEVORRICHTUNG
ELEMENT FOR COVERING THE PROJECTION APERTURE OF A HEAD-UP DISPLAY DEVICE

(30) Priorité: 11.09.2019 FR 1909989
(43) Date de publication de la demande: 20.07.2022
(73) Titulaire: Stellantis Auto SAS, 78300 Poissy (FR); Centre National de la Recherche Scientifique, 75016 Paris Cedex 16 (FR); Universite Paris-Sud, 91400 Orsay (FR)
(72) Inventeur: LOPEZ, Thomas, 75011 PARIS 11 (FR); BARAT, David, 92140 CLAMART (FR); PRADERE, Laetitia, 91570 BIEVRES (FR); DAGENS, Béatrice, 92160 Antony (FR)
(86) Numéro de dépôt international: PCT/FR2020/051487
(87) Numéro de publication internationale: WO 2021/048480

(56) Documents cités:
- FR-A1- 3 049 071
- FR-A1- 3 049 720
- GB-A- 2 569 208
- STEVEN LARSON ET AL: "The extraordinary optical transmission and sensing properties of Ag/Ti composite nanohole arrays", PHYSICAL CHEMISTRY CHEMICAL PHYSICS, vol. 21, no. 7, 13 February 2019 (2019-02-13), pages 3771 - 3780, XP055697067, ISSN: 1463-9076, DOI: 10.1039/C8CP07729K

## Description

### [Domaine technique]

L'invention concerne un élément de couverture anti-poussière agencé pour obturer une ouverture de projection ménagée dans la planche de bord d'un véhicule et traversée par le faisceau lumineux source porteur d'informations projeté par le module de projection d'un dispositif d'affichage tête-haute jusqu'à un élément de renvoi partiellement réfléchissant.

### [Technique antérieure]

Dans le cadre de l'amélioration de la sécurité routière, les constructeurs d'automobiles utilisent depuis quelques années des dispositifs d'affichage tête haute désignés généralement sous les acronymes ATH (pour Afficheur Tête Haute) ou HUD (pour Head Up Display) et permettant de projeter des informations dans le champ de vision du conducteur devant le véhicule automobile.

Ce type de dispositif d'affichage comporte un module de projection logé dans une cavité ménagée sous la planche de bord et apte à projeter un faisceau lumineux source porteur d'informations jusqu'à un élément de renvoi apte à réfléchir une partie des rayons lumineux provenant de ce module de projection vers le conducteur du véhicule automobile de sorte que ce dernier visualise ces informations sous la forme d'une image virtuelle située quelques mètres au devant du véhicule dans une zone surmontant le capot ou la route et sans modification de l'accommodation des yeux.

Suivant les dispositifs, l'élément de renvoi est constitué soit par un film incorporé directement au pare-brise du véhicule, soit par une lame indépendante du pare-brise et saillant de la planche de bord.

A l'aplomb du module de projection, la façade supérieure de la planche de bord présente une ouverture se trouvant sur le chemin du faisceau lumineux entre le module de projection et l'élément de renvoi.

Afin de protéger le module de projection de la poussière, il est connu d'obturer cette ouverture par un élément de couverture comportant un support transparent éventuellement recouvert sur l'une de ces faces d'un revêtement réfléchissant les rayons infrarouges afin que ces derniers ne puissent pénétrer à l'intérieur de la cavité logeant le module le projection de sorte à empêcher sa montée en température.

Le document FR 3 044 113 A1 divulgue ainsi un tel élément de couverture se composant d'un filtre polarisant et d'un élément de modification de polarisation situé entre le filtre polarisant et le module de projection. L'élément de modification de polarisation permet de modifier la polarisation du faisceau lumineux incident provenant du module de projection entre un premier type de polarisation de type circulaire et un second type de polarisation de type linéaire. Le filtre polarisant ne laisse passer que les rayons lumineux qui correspondent au second type de polarisation linéaire dans une certaine direction de polarisation. On connait aussi par le document STEVEN LARSON ET AL, "The extraordinary optical transmission and sensing properties of Ag/Ti composite nanohole arrays", PHYSICAL CHEMISTRY CHEMICAL PHYSICS,vol 21, no. 7, 13 février 2019 (2019-02-13), page 3771-3780, des réseaux de nanotrous composites fabriqués par une combinaison de lithographie de nanosphères, de gravure ionique réactive et de techniques de dépôt à double faisceau électronique. On connait aussi par le document FR3049720, un afficheur tête-haute comprenant une unité de projection d'un faisceau lumineux à destination d'un combineur et un boîtier renfermant en partie au moins l'unité de projection. Le boîtier présente une fenêtre fermée par une paroi au moins en partie transparente conçue pour être traversée par le faisceau lumineux projeté par l'unité de projection. La paroi présente un facteur de transmission de la lumière variable en fonction de la longueur d'onde.

Cette combinaison des éléments de modification de polarisation et d'un filtre polarisant dans l'élément de couverture d'un dispositif d'affichage tête haute, notamment d'un dispositif d'affichage tête haute réfléchi directement par le pare-brise permet d'éviter les réflexions parasites de la lumière solaire dans le dispositif d'affichage tête haute dans le cas du rayonnement solaire directement incident, de sorte à ne pas éblouir le conducteur qui regarde le dispositif d'affichage tête haute.

Toutefois, ces éléments de couverture transparents ont pour inconvénient de laisser apparents les composants optiques du module de projection aux yeux des observateurs situés à l'extérieur du véhicule et regardant au travers du pare-brise, ce qui impacte négativement le niveau de qualité perçue du véhicule.

### [Exposé de l'invention]

La présente invention vise donc à améliorer la situation.

Elle propose à cet effet un élément de couverture anti-poussière agencé pour obturer une ouverture de projection ménagée dans la planche de bord d'un véhicule et traversée par le faisceau lumineux source porteur d'informations projeté par le module de projection d'un dispositif d'affichage tête-haute jusqu'à un élément de renvoi partiellement réfléchissant, ledit élément de couverture comportant un support transparent ainsi qu'un revêtement optique apposé sur l'une des faces dudit support ; caractérisé en ce que ledit revêtement optique comprend une couche métallique à propriétés plasmoniques, dotée d'un réseau de nanoperforations sub-longueur d'onde, et configurée pour permettre la transmission extraordinaire d'une ou plusieurs bandes restreintes de longueurs d'ondes du spectre visible centrées sur la ou les longueurs d'onde du faisceau lumineux projeté par ledit module de projection, ledit revêtement optique comprend une couche en matériau magnéto-optique transparent interposée entre ledit support et ladite couche métallique et interagissant avec cette dernière pour rendre ladite transmission extraordinaire non réciproque de sorte que la ou lesdites longueurs d'onde du faisceau lumineux projeté par ledit module de projection soient transmises uniquement dans le sens allant de ce module de projection vers ledit élément de renvoi, et de sorte que les autres longueurs d'onde visibles de la ou desdites bandes restreintes soient transmises uniquement dans le sens opposé allant de l'élément de renvoi vers le module de projection.

L'élément de couverture anti-poussière selon l'invention permet ainsi de ne pas perturber la transmission des longueurs d'onde du faisceau émis par le module de projection du dispositif d'affichage tête-haute vers l'élément de renvoi partiellement réfléchissant, tout empêchant la majeure parties des composantes de la lumière extérieure du soleil de le traverser de sorte à dissimuler au moins partiellement les composants optiques du module de projection aux yeux des observateurs situés à l'extérieur du véhicule et regardant au travers du pare-brise.

Selon des caractéristiques préférées dudit élément de couverture anti-poussière selon l'invention :
- ladite couche en matériau magnéto-optique est constituée en oxyde de grenat ;
- ladite couche métallique est constituée en or ou en argent ;
- la ou lesdites bandes restreintes de longueurs d'onde présentent une largeur comprise entre 10 et 100 nm ;
- ladite couche métallique est configurée pour permettre la transmission extraordinaire de trois dites bandes restreintes de longueurs d'onde centrées sur les trois longueurs d'onde associées au système RVB ;
- ledit réseau de nanoperforations sub-longueur d'onde est périodique ;
- ledit réseau de nanoperforations sub-longueur d'onde est constitué par une pluralité de nanoperforations circulaires concentriques, par des nanoperforations circulaires de dimensions identiques et agencées sous forme matricielle, ou encore par des nanoperforations linéaires parallèles espacées régulièrement les unes des autres ; et/ou
- ledit élément de couverture comporte également un second revêtement optique antireflet apposé sur l'autre face dudit support transparent.

L'invention vise également sous un second aspect un véhicule automobile comportant un dispositif d'affichage tête-haute doté d'un module de projection implanté sous la planche de bord et apte à émettre un faisceau lumineux source porteur d'informations jusqu'à un élément de renvoi partiellement réfléchissant, ledit faisceau lumineux traversant une ouverture ménagée dans la planche de bord et étant obturée par un tel élément de couverture anti-poussière.

### [Brève description des dessins]

L'exposé de l'invention sera maintenant poursuivi par la description détaillée d'un exemple de réalisation, donnée ci-après à titre illustratif mais non limitatif, en référence aux dessins annexés, sur lesquels :
[Fig 1] représente une vue schématique en section longitudinale verticale de la partie avant d'un véhicule automobile comportant un dispositif d'affichage tête-haute comprenant un module de projection implanté sous la planche de bord de ce véhicule à l'aplomb d'une ouverture de passage obturée par un élément de couverture selon l'invention ; et
[Fig 2] est une vue agrandie en coupe transversale de l'élément de couverture de la figure 1.

[Description détaillée]

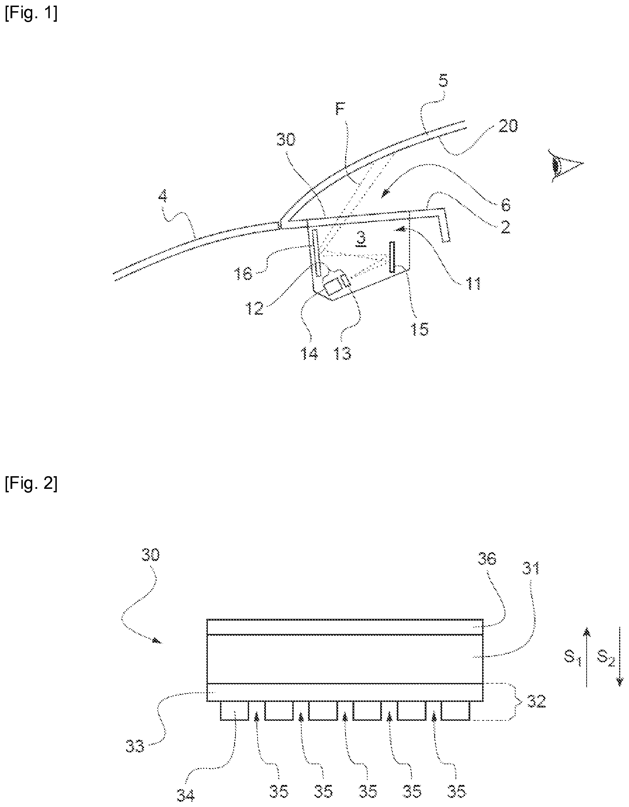

La figure 1 représente une vue schématique en section longitudinale verticale de la partie avant d'un véhicule automobile dont la planche de bord 2 intègre un dispositif d'affichage tête-haute.

Ce dispositif d'affichage comporte un module de projection 11 logé dans une cavité 3 ménagée sous la planche de bord 2 et destiné à projeter un faisceau lumineux source porteur d'informations F jusqu'à un élément de renvoi 20 transparent apte à réfléchir une partie des rayons lumineux provenant de ce module de projection 11 vers les yeux du conducteur du véhicule automobile, de sorte que ce dernier visualise ces informations sous la forme d'une image virtuelle située quelques mètres au devant du véhicule dans une zone surmontant le capot 4 ou la route et sans modification de l'accommodation des yeux.

Parmi les informations projetées, on peut citer par exemple la vitesse du véhicule, la vitesse maximale autorisée sur la voie de circulation empruntée, le nombre de kilomètres effectués depuis la dernière mise à zéro du compteur kilométrique journalier, l'autonomie du véhicule en terme de quantité de carburant ou de kilomètres, des alertes relatives au distances de sécurité ou au respect de la voie de circulation, ou encore des aides au stationnement.

L'élément de renvoi est ici constitué par un film 20 incorporé au pare-brise 5 du véhicule. Ce film 20 est suffisamment transparent pour laisser passer une partie des rayons lumineux ambiant provenant de l'environnement tout en étant suffisamment réfléchissant pour renvoyer une partie des rayons lumineux provenant de ce module de projection 11 vers le conducteur de sorte que ce dernier visualise les informations projetées sous la forme d'une image virtuelle située quelques mètres au devant du véhicule dans une zone surmontant le capot ou la route et sans modification de l'accommodation des yeux.

Le module de projection 11 comporte un projecteur 12 constitué par un afficheur couleur 13 de type RVB (par exemple, une dalle LCD dont chaque pixel est composé de trois sous-pixel rouge, vert et bleu adjacents) associé à une source lumineuse rétro-éclairante 14 (par exemple par une diode laser ou une LED de forte puissance).

Ce module de projection 11 comprend également un système optique doté notamment de plusieurs miroirs de déviation asphériques 15, 16 aptes à renvoyer le faisceau lumineux issu du projecteur 12 sur l'élément de renvoi 20.

A l'aplomb du module de projection 11, la façade supérieure de la planche de bord 2 présente une ouverture 6 se trouvant sur le chemin du faisceau lumineux entre le module de projection 11 et l'élément de renvoi 20.

Afin d'empêcher l'introduction d'objets étrangers dans la cavité 3 et de protéger le module de projection 11 de la poussière, cette ouverture 6 est obturée par un élément de couverture 30.

En référence à la figure 2, cet élément de couverture 30 comporte un revêtement optique 32 apposé par collage ou par lithographie électronique sur la face interne (celle tournée en direction du module de projection 11) d'un support 31 en matériau transparent pouvant être du verre ou un polymère plastique tel que par exemple le Polybutyral de vinyle (PVB) ou encore le Polytéréphtalate d'éthylène (PET).

Le revêtement optique 32 comprend une couche 33 en matériau magnéto-optique transparent (avantageusement en oxyde de grenat) recouverte d'une couche métallique 34 présentant des propriétés plasmoniques dans le spectre du visible.

La couche métallique 34 présente un réseau de nanoperforations 35 espacées périodiquement et dont les dimensions sont nettement inférieures à la longueur d'onde du rayonnement incident (ces dernières étant ainsi dénommées nanoperforations sub-longueur d'onde).

Du fait de leurs caractéristiques physiques, ces perforations nanométriques présentent des propriétés de transmission extraordinaire de certaines longueurs d'ondes du spectre visible.

Pour une certaine onde incidente présentant une longueur d'onde donnée supérieure aux dimensions des nanoperforations du réseau, il se produit un phénomène de résonance avec les plasmons de surface se traduisant par un pic en transmission de cette onde incidente.

Cette transmission est qualifiée d'extraordinaire car elle dépasse largement (d'un facteur pouvant atteindre plusieurs dizaines) les contributions cumulées de chaque nanoperforation du réseau prise individuellement.

Les longueurs d'ondes pour lesquelles la couche métallique 34 assure une transmission extraordinaire peuvent être ajustées en jouant sur la forme et la profondeur du réseau de nanoperforations sub-longueur d'onde 35, sur la différence entre les indices de réfraction des matériaux, ou encore sur l'harmonique du réseau.

Le réseau de nanoperforations sub-longueur d'onde 35 peut par exemple être constitué par une pluralité de nanoperforations circulaires concentriques, par des nanoperforations circulaires de dimensions identiques et agencées sous forme matricielle, ou encore par des nanoperforations linéaires parallèles espacées régulièrement les unes des autres.

L'épaisseur de la couche métallique 34 définissant la profondeur de ces nanoperforations sub-longueur d'onde 35 peut ainsi être comprise avantageusement entre quelques dizaines et quelques centaines de nanomètres.

Cette couche métallique 34 est par ailleurs constituée de préférence dans un métal présentant une bonne longueur de propagation des plasmons électriques dans les longueurs d'ondes du spectre visible, tel que l'or ou l'argent voire le platine, le cuivre ou l'aluminium.

Dans le cadre de l'invention, la couche métallique 34 est configurée pour permettre la transmission extraordinaire de certaines bandes restreintes de longueurs d'ondes visibles présentant une largeur de 10 à 100 nm et étant centrées sur les longueurs d'onde du faisceau lumineux projeté par le module de projection 11, à savoir les longueurs d'onde 700 nm, 546,1 nm et 435, 9 nm respectivement associées aux couleurs rouge, vert et bleu du système RVB.

Par ailleurs, l'interaction magnéto-plasmonique se produisant à l'interface entre la couche métallique 34 et la couche en matériau magnéto-optique transparent 33 (interposée entre cette couche 34 et le support 31 rend cette transmission extraordinaire non réciproque.

Plus précisément, le revêtement optique 32 est configuré de sorte que les longueurs d'onde utilisées par l'afficheur 13 du module de projection 11 (en l'espèce, les longueurs d'onde du système RVB) soient transmises uniquement dans le sens S₁ allant de ce module de projection 11 vers l'élément de renvoi 20, et de sorte que les autres longueurs d'onde visibles des bandes restreintes soient transmises uniquement dans le sens opposé S₂ allant de l'élément de renvoi 20 vers le module de projection 11.

L'élément de couverture 30 selon l'invention permet ainsi d'assurer la transmission des faisceaux lumineux issus du module de projection 11 jusqu'à l'élément de renvoi 20, tout en empêchant l'ensemble du spectre visible de la lumière ambiante en provenance de l'extérieur du véhicule de le traverser dans les deux sens de sorte à dissimuler les composants optiques du module de projection 11 situés dans la cavité 3 aux yeux des observateurs situés à l'extérieur du véhicule et regardant au travers de cet élément de couverture 30.

L'élément de couverture 30 peut également comporter avantageusement un second revêtement optique antireflet 36 apposé sur la face externe (celle tournée en direction de l'élément de renvoi 20) du support transparent 31 et permettant d'éviter que cet élément 30 ne reflète la lumière extérieure.

Selon des variantes de réalisation non représentées, l'afficheur du module de projection est monochromatique (par exemple de couleur ambre). Dans un tel cas de figure, la couche métallique est configurée pour permettre la transmission extraordinaire d'une unique bande restreinte de longueurs d'onde visibles centrée sur la longueur d'onde utilisée par cet afficheur (par exemple, la longueur d'onde 590 nm associée à la couleur ambre).

Selon d'autres variantes de réalisation non représentées et qui ne font pas partie de l'invention, l'élément de couverture est dépourvu de la couche en matériau magnéto-optique. Dans un tel cas de figure, une petite partie des composantes de la lumière extérieure du soleil peut traverser dans les deux sens l'élément de couverture de sorte que certains composants optiques du module de projection demeurent éventuellement visibles aux yeux des observateurs situés à l'extérieur du véhicule.

Selon encore d'autres variantes de réalisation non représentées, l'élément de renvoi transparent semi-réfléchissant peut être constitué par une lame indépendante du pare-brise et saillant de la planche de bord. 1

## Revendications

1. Elément de couverture anti-poussière agencé pour obturer une ouverture de projection (6) ménagée dans la planche de bord (2) d'un véhicule et traversée par le faisceau lumineux source porteur d'informations (F) projeté par le module de projection (11) d'un dispositif d'affichage tête-haute jusqu'à un élément de renvoi partiellement réfléchissant (20), ledit élément de couverture comportant un support transparent (31) ainsi qu'un revêtement optique (32) apposé sur l'une des faces dudit support (31) ; ledit revêtement optique (32) comprenant une couche métallique à propriétés plasmoniques (34), dotée d'un réseau de nanoperforations sub-longueur d'onde (35), et configurée pour permettre la transmission extraordinaire d'une ou plusieurs bandes restreintes de longueurs d'ondes du spectre visible centrées sur la ou les longueurs d'onde du faisceau lumineux (F) projeté par ledit module de projection (11), **caractérisé en ce que** ledit revêtement optique (32) comprend une couche en matériau magnéto-optique transparent (33) interposée entre ledit support (31) et ladite couche métallique (34) et interagissant avec cette dernière pour rendre ladite transmission extraordinaire non réciproque de sorte que la ou lesdites longueurs d'onde du faisceau lumineux (F) projeté par ledit module de projection (11) soient transmises uniquement dans le sens (S₁) allant de ce module de projection (11) vers ledit élément de renvoi (20), et de sorte que les autres longueurs d'onde visibles de la ou desdites bandes restreintes soient transmises uniquement dans le sens opposé (S₂) allant de l'élément de renvoi (20) vers le module de projection (11).

2. Elément de couverture selon la revendication 1, **caractérisé en ce que** ladite couche en matériau magnéto-optique (33) est constituée en oxyde de grenat.

3. Elément de couverture selon l'une des revendications 1 à 2, **caractérisé en ce que** ladite couche métallique (34) est constituée en or ou en argent.

4. Elément de couverture selon l'une des revendications 1 à 3, **caractérisé en ce que** la ou lesdites bandes restreintes de longueurs d'onde présentent une largeur comprise entre 10 et 100 nm.

5. Elément de couverture selon l'une des revendications 1 à 4, **caractérisé en ce que** ladite couche métallique (34) est configurée pour permettre la transmission extraordinaire de trois dites bandes restreintes de longueurs d'onde centrées sur les trois longueurs d'onde associées au système RVB.

6. Elément de couverture selon l'une des revendications 1 à 5, **caractérisé en ce que** ledit réseau de nanoperforations sub-longueur d'onde (35) est périodique.

7. Elément de couverture selon l'une des revendications 1 à 6, **caractérisé en ce que** ledit réseau de nanoperforations sub-longueur d'onde (35) est constitué par une pluralité de nanoperforations circulaires concentriques, par des nanoperforations circulaires de dimensions identiques et agencées sous forme matricielle, ou encore par des nanoperforations linéaires parallèles espacées régulièrement les unes des autres.

8. Elément de couverture selon l'une des revendications 1 à 7, **caractérisée en ce qu'**il comporte également un second revêtement optique antireflet (36) apposé sur l'autre face dudit support transparent (31).

9. Véhicule automobile comportant un dispositif d'affichage tête-haute doté d'un module de projection (11) implanté sous la planche de bord (2) et apte à émettre un faisceau lumineux source porteur d'informations (F) jusqu'à un élément de renvoi partiellement réfléchissant (20), ledit faisceau lumineux (F) traversant une ouverture (6) ménagée dans la planche de bord (2) et étant obturée par un élément de couverture anti-poussière (30) comportant un support transparent (31) ainsi qu'un revêtement optique (32) apposé sur l'une des faces dudit support (31) ; **caractérisée en ce que** ledit élément de couverture anti-poussière (30) est conforme à l'une des revendications 1 à 8. 1

## Patentansprüche

1. Staubdichtes Abdeckelement, das dazu dient, eine Projektionsöffnung (6) zu verschließen, die im Armaturenbrett (2) eines Fahrzeugs vorgesehen ist und von dem Quellenlichtstrahl gekreuzt wird, der Informationen (F) trägt, die vom Projektionsmodul (11) von einem Head-up-Display projiziert werden Vorrichtung mit einem teilweise reflektierenden Rückführungselement (20), wobei das Abdeckelement einen transparenten Träger (31) sowie eine optische Beschichtung (32) umfasst, die an einer Seite des Trägers (31) befestigt ist; wobei die optische Beschichtung (32) eine Metallschicht mit plasmonischen Eigenschaften (34) umfasst, die mit einer Anordnung von Nanoperforationen (35) im Subwellenlängenbereich versehen ist und so konfiguriert ist, dass sie die außergewöhnliche Übertragung eines oder mehrerer eingeschränkter Längenwellenbänder des sichtbaren Spektrums ermöglicht zentriert auf die Wellenlänge(n) des vom Projektionsmodul (11) projizierten Lichtstrahls (F), **dadurch gekennzeichnet, dass** die optische Beschichtung (32) eine Schicht aus transparentem magnetooptischem Material (33) umfasst, die zwischen dem Träger (31) angeordnet ist) und der Metallschicht (34) und interagieren mit dieser, um die außergewöhnliche nichtreziproke Übertragung zu bewirken, so dass die Wellenlänge(n) des vom Projektionsmodul (11) projizierten Lichtstrahls (F) nur in übertragen werden Richtung (S ₁), die von diesem Projektionsmodul (11) zum Rückführungselement (20) verläuft, und so dass die anderen sichtbaren Wellenlängen des bzw. der eingeschränkten Bänder nur in der entgegengesetzten Richtung (S ₂), ausgehend von der Rückführung, übertragen werden Element (20) an das Projektionsmodul (11).

2. Abdeckelement nach Anspruch 1, **dadurch gekennzeichnet, dass** die Schicht aus magnetooptischem Material (33) aus Granatoxid besteht.

3. Abdeckelement nach einem der Ansprüche 1 bis 2, **dadurch gekennzeichnet, dass** die Metallschicht (34) aus Gold oder Silber besteht.

4. Abdeckelement nach einem der Ansprüche 1 bis 3, **dadurch gekennzeichnet, dass** das bzw. die begrenzten Wellenlängenbänder eine Breite zwischen 10 und 100 nm aufweisen.

5. Abdeckelement nach einem der Ansprüche 1 bis 4, **dadurch gekennzeichnet, dass** die Metallschicht (34) so konfiguriert ist, dass sie die außergewöhnliche Übertragung von drei der eingeschränkten Wellenlängenbänder ermöglicht, die auf den drei dem RGB-System zugeordneten Wellenlängen zentriert sind.

6. Abdeckelement nach einem der Ansprüche 1 bis 5, **dadurch gekennzeichnet, dass** das Netzwerk von Nanoperforationen im Subwellenlängenbereich (35) periodisch ist.

7. Abdeckelement nach einem der Ansprüche 1 bis 6, **dadurch gekennzeichnet, dass** das Netzwerk von Nanoperforationen im Subwellenlängenbereich (35) aus einer Vielzahl konzentrischer kreisförmiger Nanoperforationen, aus kreisförmigen Nanoperforationen mit identischen Abmessungen und in Matrixform oder sogar parallel angeordneten Nanoperforationen besteht lineare Nanoperforationen, die regelmäßig voneinander beabstandet sind.

8. Abdeckelement nach einem der Ansprüche 1 bis 7, **dadurch gekennzeichnet, dass** es außerdem eine zweite optische Antireflexbeschichtung (36) umfasst, die auf der anderen Seite des transparenten Trägers (31) angebracht ist.

9. Kraftfahrzeug mit einer Head-up-Display-Vorrichtung, die mit einem Projektionsmodul (11) ausgestattet ist, das unter dem Armaturenbrett (2) installiert ist und in der Lage ist, einen informationstragenden Quelllichtstrahl (F) an ein teilweise reflektierendes Rückstrahlelement (20) zu senden, wobei dieses Licht Der Strahl (F) verläuft durch eine im Armaturenbrett (2) vorgesehene Öffnung (6) und ist durch ein staubdichtes Abdeckelement (30) verschlossen, das einen transparenten Träger (31) sowie eine daran befestigte optische Beschichtung (32) umfasst der Flächen des Trägers (31); **dadurch gekennzeichnet, dass** das Staubschutzelement (30) einem der Ansprüche 1 bis 8 entspricht. 1

## Claims

1. [Dust-proof cover element arranged to close a projection opening (6) provided in the dashboard (2) of a vehicle and crossed by the source light beam carrying information (F) projected by the projection module (11) from a head-up display device to a partially reflective return element (20), said cover element comprising a transparent support (31) as well as an optical coating (32) affixed to one faces of said support (31); said optical coating (32) comprising a metallic layer with plasmonic properties (34), provided with an array of sub-wavelength nanoperforations (35), and configured to allow the extraordinary transmission of one or more restricted bands of lengths waves of the visible spectrum centered on the wavelength(s) of the light beam (F) projected by said projection module (11), **characterized in that** said optical coating (32) comprises a layer of transparent magneto-optical material (33) interposed between said support (31) and said metal layer (34) and interacting with the latter to make said extraordinary non-reciprocal transmission so that the said wavelength(s) of the light beam (F) projected by said module of projection (11) are transmitted only in the direction (S ₁) going from this projection module (11) towards said return element (20), and so that the other visible wavelengths of said restricted band(s) are transmitted only in the opposite direction (S ₂) going from the return element (20) to the projection module (11).

2. Covering element according to claim 1, **characterized in that** said layer of magneto-optical material (33) consists of garnet oxide.

3. Covering element according to one of claims 1 to 2, **characterized in that** said metal layer (34) is made of gold or silver.

4. Covering element according to one of claims 1 to 3, **characterized in that** the said restricted wavelength band(s) have a width of between 10 and 100 nm.

5. Covering element according to one of claims 1 to 4, **characterized in that** said metal layer (34) is configured to allow the extraordinary transmission of three said restricted bands of wavelengths centered on the three wavelengths associated with the RGB system.

6. Covering element according to one of claims 1 to 5, **characterized in that** said network of sub-wavelength nanoperforations (35) is periodic.

7. Covering element according to one of claims 1 to 6, **characterized in that** said network of sub-wavelength nanoperforations (35) is constituted by a plurality of concentric circular nanoperforations, by circular nanoperforations of identical dimensions and arranged under matrix shape, or even by parallel linear nanoperforations spaced regularly from each other.

8. Covering element according to one of Claims 1 to 7, **characterized in that** it also comprises a second anti-reflective optical coating (36) affixed to the other face of said transparent support (31).

9. Motor vehicle comprising a head-up display device equipped with a projection module (11) installed under the dashboard (2) and capable of emitting a source light beam carrying information (F) to an element partially reflective return beam (20), said light beam (F) passing through an opening (6) provided in the dashboard (2) and being closed by a dust-proof cover element (30) comprising a transparent support (31) as well as an optical coating (32) affixed to one of the faces of said support (31); **characterized in that** said dust cover element (30) conforms to one of claims 1 to 8. 1
